# EUROPEAN PATENT SPECIFICATION

(11) **EP 4 557 038 B1**
(45) Date of publication and mention of the grant of the patent: **29.04.2026**
(21) Application number: 24211952.7
(22) Date of filing: 11.11.2024
(51) Int. Cl.: G05D 1/646, G05D 1/686, G05D 1/243, G05D 105/28, G05D 105/30, G05D 107/17, G05D 107/60, G05D 109/10, G05D 111/10

(54) **MOBILE OBJECT CONTROL DEVICE, MOBILE OBJECT CONTROL METHOD, AND SYSTEM**
MOBILE OBJEKTSTEUERUNGSVORRICHTUNG, MOBILES OBJEKTSTEUERUNGSVERFAHREN UND SYSTEM
DISPOSITIF DE COMMANDE D'OBJET MOBILE, PROCÉDÉ DE COMMANDE D'OBJET MOBILE ET SYSTÈME

(30) Priority: 15.11.2023 JP 2023194420
(43) Date of publication of application: 21.05.2025
(73) Proprietor: HONDA MOTOR CO., LTD., Tokyo 105-8404 (JP)
(72) Inventor: MATSUZAKI, Sango, Wako-shi, Saitama, 351-0193 (JP); KOMURO, Misa, Wako-shi, Saitama, 351-0193 (JP)
(74) Representative: Kiwit, Benedikt

(56) References cited:
- US-A1- 2006 069 471
- US-A1- 2013 090 802
- US-A1- 2013 332 044

## Description

### BACKGROUND OF THE INVENTION

### Field of the Invention

The present invention relates to a mobile object control device and a mobile object control method.

### Description of Related Art

Conventionally, robots that guide users to desired locations or transport luggage are known (for example, J 2012- 111 011 A). The robot described above refers to a movement speed database in which maximum movement speeds are associated with each area in the environment, and moves at a movement speed that has a set maximum movement speed as the upper limit.

In general, when a robot of the prior art generates a route to a destination, it generates a plurality of via points and generates the route by connecting these via points. Thereafter, the robot travels toward the destination while passing through these via points. However, in the prior art, when the robot passes through each via point, since the robot sets a corresponding via point as a temporary destination and is controlled so that it reliably passes through the set destination, the robot may be controlled so that it decelerates before the via point. As a result, the robot may not be able to travel efficiently to the destination via the via points.

US 2013/ 090 802 A1 discloses a device and method for mobile object control according to the preambles of the independent claims. US 2006/ 069 471 A1 discloses a method for automatically guiding a mining machine, wherein a route needed by the mining machine is determined as successive points in a coordinate system fixed in relation to the mine and the location of the mining machine on the route is determined using at least one positioning device provided in the mining machine.
US 2013/ 332 044 A1 discloses an apparatus for controlling a speed on a curved road in a smart cruise control system.

### SUMMARY OF THE INVENTION

The present invention has been made in consideration of the circumstances described above, and one of its objectives is to provide a mobile object control device and a mobile object control method that can efficiently run a robot to a destination via a via point.

The mobile object control device, the mobile object control method, and the system according to the present invention have adopted the following configurations.
(1): A mobile object control device according to one aspect of the present invention includes a storage medium configured to store computer-readable instructions, and a processor connected to the storage medium, in which the processor is configured to execute the computer-readable instructions to recognize a surrounding situation of a mobile object on the basis of at least an image of the surrounding situation of the mobile object, generate, on the basis of the recognized surrounding situation and a destination which is set, a route which is from the mobile object to the destination and is composed of via points to be passed through by the mobile object, control the mobile object so that the mobile object moves along the generated route to the destination via the via points, and when the mobile object travels toward a first via point of a plurality of via points, set a temporary destination point, which is located after the first via point along the generated route, between the first via point and a second via point that is the next via point after the first via point, and cause the mobile object to travel toward the temporary destination point via the first via point.
   Furthermore, the processor is further configured such that, when the mobile object reaches the first via point, the processor deletes the temporary destination point, which is located after the first via point along the generated route, sets a next temporary destination point, which is located after the second via point along the generated route, between the second via point and a third via point which is the next via point after the second via point, and repeats processing of causing the mobile object to travel toward the next temporary destination point via the second via point.
(2): **In** the aspect of (1) described above, the processor may be configured to set the temporary destination point when a distance between the mobile object and the first via point becomes equal to or less than a threshold value.
(3): In the aspect of (1) described above, the mobile object may be configured to operate in either a following mode in which the mobile object moves to follow a user, or a guidance mode in which the mobile object moves in front of the user in accordance with a movement speed of the user.
(4): In the aspect of (1) described above, when the mobile object operates in the following mode, the destination may be the user or a point within a predetermined range from the user.
(5): In the aspect of (3) described above, when the mobile object operates in the guidance mode, the destination may be a point set by the user or a point within a predetermined range in front of the user.
(6): In the aspect of (3) described above, when the mobile object operates in the guidance mode, the destination may be a temporary point that is temporarily set to reach a destination point set by the user.
(7): In the aspect of (3) described above, when the mobile object operates in the guidance mode, the destination may be a point estimated on the basis of map information or an operation of the user.
(8): In the aspect of (1) described above, the second via point may be the destination.
(9): A mobile object control method according to another aspect of the present invention includes, by a computer, recognizing a surrounding situation of the mobile object on the basis of at least an image of the surrounding situation of the mobile object, generating a route that is from the mobile object to a destination, which is set, on the basis of the recognized surrounding situation and the destination, and is constituted by via points to be passed through by the mobile object, controlling the mobile object so that the mobile object moves to the destination via the via points along the generated route, when the mobile object travels toward a first via point of the plurality of via points, setting a temporary destination point, which is located after the first via point along the generated route, between the first via point and a second via point that is the next via point after the first via point, and causing the mobile object to travel toward the temporary destination point via the first via point.

Furthermore, when the mobile object reaches the first via point, deleting the temporary destination point, which is located after the first via point along the generated route, and setting a next temporary destination point, which is located after the second via point along the generated route, between the second via point and a third via point which is the next via point after the second via point, and repeating processing of causing the mobile object to travel toward the next temporary destination point via the second via point.

An exemplary system includes a mobile object control device and a mobile object, in which the mobile object control device is configured to: recognize a surrounding situation of a mobile object on the basis of at least an image of the surrounding situation of the mobile object, generate, on the basis of the recognized surrounding situation and a set destination, a route which is from the mobile object to the destination and is composed of via points to be passed through by the mobile object, control the mobile object so that the mobile object moves along the generated route to the destination via the via points, and when the mobile object travels toward a first via point of a plurality of via points, set a temporary destination point between the first via point and a second via point that is the next via point after the first via point, and cause the mobile object to travel toward the temporary destination point via the first via point.

According to the aspects of (1) to (9), it is possible to cause a robot to travel efficiently to a destination via the via points.

### BRIEF DESCRIPTION OF THE DRAWINGS

FIG. 1 is a diagram which shows an example of a configuration of a mobile object system 1 including a mobile object.
FIG. 2 is a diagram for describing an example of a usage mode of a mobile object.
FIG. 3 is a diagram for describing a guidance mode.
FIG. 4 is a perspective view of a mobile object.
FIG. 5 is a diagram which shows an example of a functional configuration of a mobile object.
FIG. 6 is a diagram which shows an example of a route generated by a route generation unit.
FIG. 7 is a diagram which shows an example of traveling along a route performed by a mobile object according to a conventional technology.
FIG. 8 is a diagram which shows an example of a temporary destination point set by a route generation unit.
FIG. 9 is a diagram which shows an example of a first scene in which a mobile object travels toward a temporary destination point.
FIG. 10 is a diagram which shows an example of a second scene in which a mobile object travels toward a temporary destination point.
FIG. 11 is a diagram which shows an example of another mode in which the route generation unit sets a temporary destination point.
FIG. 12 is a flowchart which shows an example of a flow of processing executed by a control device.

### DETAILED DESCRIPTION OF THE INVENTION

In the following description, embodiments of a mobile object control device, a mobile object control method, and a system of the present invention will be described with reference to the drawings.

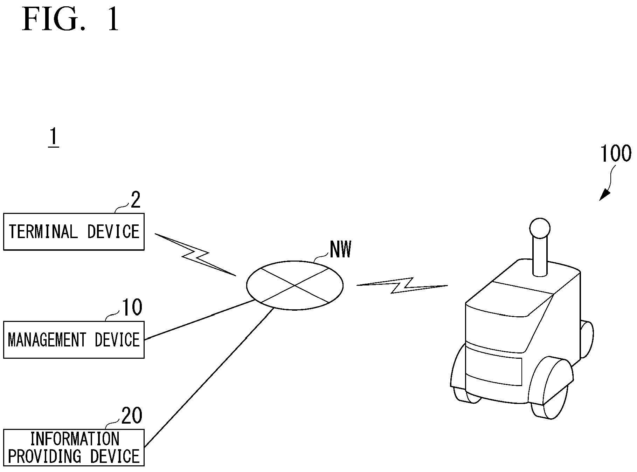

FIG. 1 is a diagram which shows an example of a configuration of a mobile object system 1 including a mobile object 100. The mobile object system 1 includes, for example, one or more terminal devices 2, a management device 10, an information providing device 20, and one or more mobile objects 100. These communicate with each other, for example, via a network NW. The network NW is, for example, any network, such as a LAN, a WAN, or an Internet line.

### [Terminal device]

The terminal device 2 is, for example, a computer device such as a smartphone or a tablet terminal. For example, the terminal device 2 requests for a provision of authority to use the mobile object 100 from the management device 10 on the basis of an operation of the user, or acquires information indicating that the use has been permitted.

### [Management device]

The management device 10 assigns to the user of the terminal device 2 the authority to use the mobile object 100 in response to a request from the terminal device 2, or manages reservations for the use of the mobile object 100. For example, the management device 10 generates and manages schedule information in which identification information of a preregistered user is associated with a date and time of reservations for the use of the mobile object 100.

### [Information providing device]

The information providing device 20 provides the mobile object 100 with map information such as a position of the mobile object 100, an area in which the mobile object 100 moves, and surroundings of the area. The information providing device 20 may generate a route to a destination of the mobile object 100 in response to a request from the mobile object 100, and provide the generated route to the mobile object 100.

### [Mobile object]

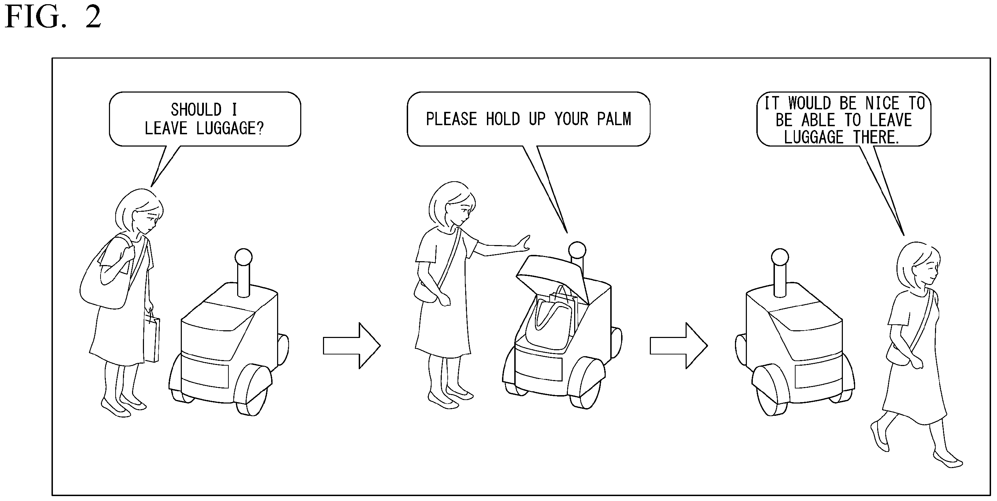

The mobile object 100 is used by a user in the following usage modes. FIG. 2 is a diagram for describing an example of the usage modes of the mobile object 100. The mobile object 100 is disposed, for example, at a specific position in a facility or a town. When a user wants to use the mobile object 100, the user can start using the mobile object 100 by operating an operation unit (not shown) of the mobile object 100, or can start using the mobile object 100 by operating the terminal device 2. For example, when a user goes shopping and has a lot of luggage, the user starts using the mobile object 100 and puts the luggage in a storage section of the mobile object 100. The mobile object 100 then moves together with the user to autonomously follow the user. The user can continue shopping with the luggage stored in the mobile object 100, or move on to a next destination. For example, the mobile object 100 moves together with the user while moving on a sidewalk or a crosswalk on a roadway. The mobile object 100 can move in the areas through which pedestrians can pass, such as roadways and sidewalks. For example, the mobile object 100 may be used in indoor or outdoor facilities or private areas, such as shopping centers, airports, parks, and theme parks, and can move in areas through which pedestrians can pass.

The mobile object 100 may be capable of autonomously moving in modes such as a guidance mode and an emergency mode in addition to (or instead of) a following mode in which it follows a user as described above.

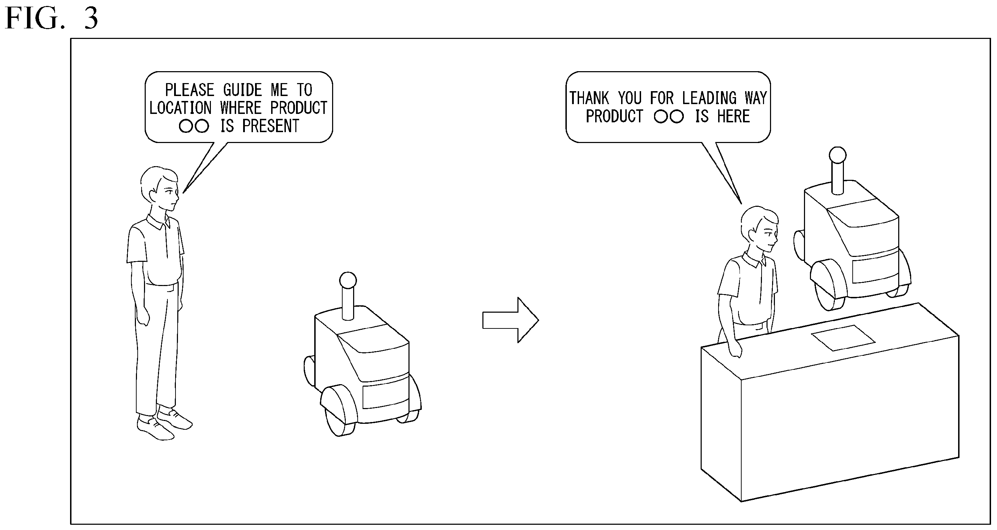

FIG. 3 is a diagram for describing the guidance mode. The guidance mode is a mode in which the mobile object 100 guides the user to a destination designated by the user, and autonomously moves in front of the user in accordance with a movement speed of the user to guide the user. As shown in FIG. 3, when the user is searching for a specific product in a shopping center, if the user requests the mobile object 100 to provide guidance to a location of the specific product, the mobile object 100 guides the user to the location of the product. As a result, the user can easily find the specific product. When the mobile object 100 is used in a shopping center, the mobile object 100 or the information providing device 20 holds information in which locations of products, locations of stores, location of facilities in the shopping center, and the like are associated with map information, and map information of the shopping center. This map information includes detailed map information including widths of roads and passages. In addition, the guidance mode may be a mode in which the user is guided to a destination estimated on the basis of information such as map information and operations of the user (including a direction, a speed, a behavior, and the like) even if the user does not designate the destination. For example, the mobile object 100 or the information providing device 20 may detect the direction of the user from an image captured by a camera 180, which will be described below, set a straight line representing the detected direction of the user, and estimate a location that intersects with the straight line or a location closest to the straight line as a destination among the locations registered in the map information. For example, the mobile object 100 or the information providing device 20 may also register a plurality of gestures (for example, a gesture for drinking a drink, a gesture for charging a mobile phone, or the like) in advance, and collate the behavior of the user detected from the image with the registered gesture to estimate a location that satisfies a request of the gesture (for example, a restaurant, a charging facility, or the like) as a destination among the locations stored in the map information. Moreover, for example, the mobile object 100 or the information providing device 20 may estimate, as a destination, a location that has been most frequently set as a destination by users in the past among the facilities stored in the map information.

The emergency mode is a mode in which the mobile object 100 moves autonomously to seek help from nearby people or facilities to help the user, when something unusual happens to the user (for example, when the user falls) while moving with the user. In addition to (or instead of) following or providing guidance as described above, the mobile object 100 may also move while maintaining a close distance to the user.

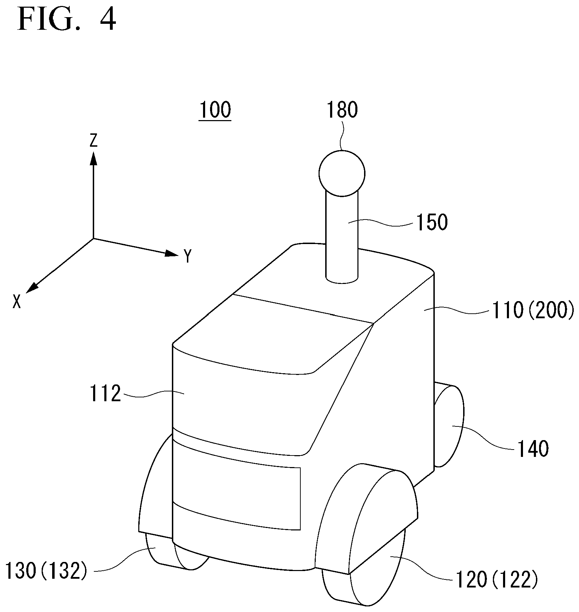

FIG. 4 is a perspective view which shows the mobile object 100. In the following description, a forward direction of the mobile object 100 is a plus x direction, a backward direction of the mobile object 100 is a minus x direction, a left direction based on the plus x direction that is a width direction of the mobile object 100 is a plus y direction, a right direction is a minus y direction, and a height direction of the mobile object 100, which is orthogonal to the x and y directions, is a plus z direction.

The mobile object 100 includes, for example, a base body 110, a door section 112 provided on the base body 110, and wheels (a first wheel 120, a second wheel 130, and a third wheel 140) attached to the base body 110. For example, a user can open the door section 112 to put luggage into a storage section provided on the base body 110 or take luggage out of the storage section. The first wheel 120 and the second wheel 130 are driving wheels, and the third wheel 140 is an auxiliary wheel (driven wheel). The mobile object 100 may be able to move using a configuration other than wheels, such as an infinite trajectory.

A cylindrical support body 150 extending in the plus z direction is provided on a surface of the base body 110 in the plus z direction. A camera 180 that captures images of a vicinity of the mobile object 100 is provided at an end of the support body 150 in the plus z direction. A position at which the camera 180 is provided may be any position different from the position described above.

The camera 180 is, for example, a camera that can capture images of a vicinity of the mobile object 100 at a wide angle (for example, 360 degrees). The camera 180 may include a plurality of cameras. The camera 180 may be realized by combining, for example, a plurality of 120-degree cameras or a plurality of 60-degree cameras.

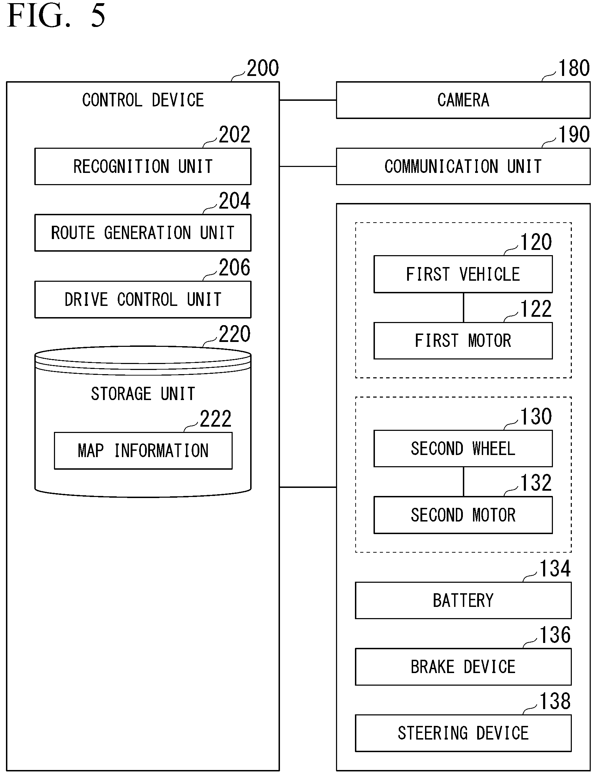

FIG. 5 is a diagram which shows an example of a functional configuration of the mobile object 100. In addition to the functional configuration shown in FIG. 4, the mobile object 100 further includes a first motor 122, a second motor 132, a battery 134, a brake device 136, a steering device 138, a communication unit 190, and a control device 200. The first motor 122 and the second motor 132 are operated by electricity supplied to the battery 134. The first motor 122 drives the first wheel 120, and the second motor 132 drives the second wheel 130. The first motor 122 may be an in-wheel motor provided on a wheel of the first wheel 120, and the second motor 132 may be an in-wheel motor provided on a wheel of the second wheel 130.

The brake device 136 outputs a brake torque to each wheel on the basis of an instruction from the control device 200. The steering device 138 includes an electric motor. The electric motor, for example, applies a force to a rack and pinion mechanism on the basis of an instruction from the control device 200 to change a direction of the first wheel 120 or the second wheel 130, and to change a course of the mobile object 100.

The communication unit 190 is a communication interface for communicating with the terminal device 2, the management device 10, or the information providing device 20.

### [Control device]

The control device 200 includes, for example, a recognition unit 202, a route generation unit 204, a drive control unit 206, and a storage unit 220. The recognition unit 202, the route generation unit 204, and the drive control unit 206 are realized by, for example, a hardware processor such as a central processing unit (CPU) executing a program (software). Some or all of these components may be realized by hardware (a circuit unit; including circuitry) such as a large scale integration (LSI), an application specific integrated circuit (ASIC), a field-programmable gate array (FPGA), or a graphics processing unit (GPU), or may be realized by software and hardware in cooperation. The program may be stored in advance in a storage device (a storage device with a non-transient storage medium) such as a hard disk drive (HDD) or flash memory, or may be stored in a removable storage medium (non-transient storage medium) such as a DVD or CD-ROM, and installed by mounting the storage medium in a drive device. The storage unit 220 is realized by a storage device such as an HDD, flash memory, or a random access memory (RAM). The storage unit 220 stores map information 222 referenced by the mobile object 100. The map information 222 is, for example, map information such as the position of the mobile object 100, the area in which the mobile object 100 moves, and the surroundings of the area, provided by the information providing device 20. A part or all of the functional constituents included in the control device 200 may also be included in another device. For example, the mobile object 100 and the other device may communicate with each other and cooperate to control the mobile object 100.

The recognition unit 202 recognizes positions (a distance from the mobile object 100 and a direction with respect to the mobile object 100) of objects around the mobile object 100, and states such as speeds and accelerations thereof on the basis of, for example, an image captured by the camera 180. The objects include traffic participants and obstacles within facilities and on roads. The recognition unit 202 recognizes and tracks a user of the mobile object 100. For example, the recognition unit 202 tracks the user on the basis of an image (for example, a facial image of the user) in which the user registered when the user uses the mobile object 100 is captured, or the facial image of the user (or features obtained from the facial image of the user) provided by the terminal device 2 or management device 10. The recognition unit 202 recognizes gestures made by the user. The mobile object 100 may be provided with a detection unit that is different from a camera, such as a radar device or LIDAR. In this case, the recognition unit 202 recognizes a surrounding situation of the mobile object 100 using a result of detection by the radar device or LIDAR instead of (or in addition to) the image.

The route generation unit 204 generates a route to a destination on the basis of the surrounding situation of the mobile object 100 recognized by the recognition unit 202. Here, the destination represents a user itself to be followed or a point within a predetermined range from the user when the mobile object 100 is in the following mode. For example, the route generation unit 204 may set a predetermined point diagonally behind the user as a destination so that the mobile object 100 can follow the user and be visible to the user. In addition, for example, the route generation unit 204 may determine a destination so as to keep it within a predetermined distance on the basis of a walking speed of the user to prevent the mobile object 100 from becoming too far away from the user. When the mobile object 100 is in the guidance mode, the destination represents, for example, a point of a product or facility set by the user. In this case, the user designates the point of a product or facility, and the mobile object 100 collates the point of the designated product or facility with the map information 222, and sets the point of the identified product or facility as a result of the collation as the destination. In addition, when in the guidance mode, if a point set by the user is far from a current location of the mobile object 100, the route generation unit 204 may set the point set by the user as a final destination, and set a point within a predetermined range from the current location as a temporary destination. In addition, in the guidance mode, the user does not necessarily have to set a destination, and the mobile object 100 may predict a direction in which the user will move and autonomously move in front of the user in accordance with the movement speed of the user. In this case, the route generation unit 204 may set a destination of the mobile object 100 as a point within a predetermined range in front of the user.

The route is a route that allows the mobile object 100 to reach the destination in a reasonable manner in consideration of a forward direction of the mobile object 100 (that is, an x-direction of the mobile object 100). The route generation unit 204 generates a number of via points for reaching the destination from the current location, and generates a route by connecting these via points. For example, the route generation unit 204 calculates a risk for each via point, and when the calculated risk meets a preset criterion (for example, when the risk for each via point is equal to or less than a threshold value Th1) or when a total value of the calculated risks meets a preset criterion (for example, when the total value of the risks is equal to or less than a threshold value Th2), adopts a route that meets the criterion as a target route along which the mobile object 100 moves. Here, it is more likely that the mobile object 100 may not enter or approach a corresponding via point as the risk value is higher, and it is more preferable for the mobile object 100 to pass through a corresponding via point as the value is closer to zero. For this reason, generally, the risk value becomes higher as the mobile object gets closer to a position of a recognized object, while the risk value becomes lower as it is farther away from the position of the recognized object.

The drive control unit 206 controls the motors (the first motor 122 and the second motor 132), the brake device 136, and the steering device 138 so that the mobile object 100 travels along the route generated by the route generation unit 204.

### [Generation of route]

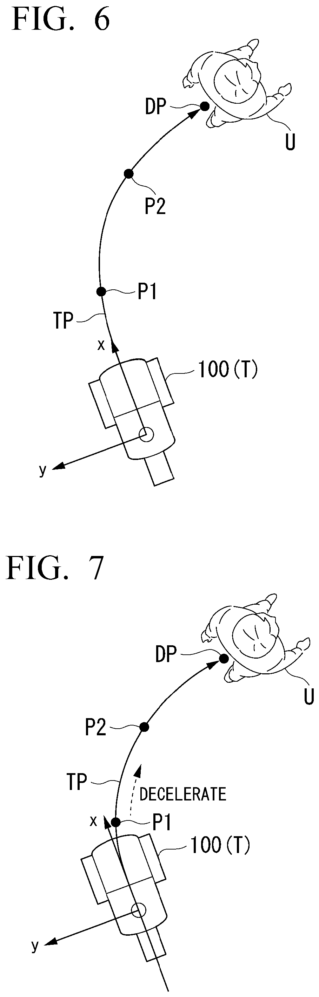

FIG. 6 is a diagram which shows an example of a route generated by the route generation unit 204. In FIG. 6, a symbol TP indicates the route generated by the route generation unit 204, symbols P1 and P2 indicate via points that make up the generated route TP, and a symbol DP indicates a destination. In a scene shown in FIG. 6, since the mobile object 100 is traveling in the following mode, a predetermined point diagonally behind the user U is set as the destination point DP of the mobile object 100, as an example. When the mobile object 100 is traveling in the guidance mode, as described above, for example, a point set by the user or a point within a predetermined range from the current location with the point set by the user as the final destination is set as the destination point DP.

FIG. 7 is a diagram which shows an example of traveling along a route performed by the mobile object 100 according to a conventional technology. FIG. 7 shows, as an example, a scene in which the mobile object 100 travels along the route TP generated in FIG. 6. As shown in FIG. 7, when the mobile object 100 according to the conventional technology approaches a nearest via point P1 of the route TP, there have been cases where the mobile object 100 is controlled so that it decelerates before the via point P1 to reliably pass through the via point P1 recognized as a temporary destination point. For this reason, there have been cases where the mobile object 100 cannot travel efficiently to a destination via a via point.

### [Setting of temporary destination point]

With the circumstances described above as a background, the present invention sets a different temporary destination point in a traveling direction of a route having passed a nearest via point, and causes the mobile object 100 to travel toward the set temporary destination point, on a premise that the mobile object 100 is controlled so that it decelerates when passing through a nearest via point recognized as a temporary destination point. As a result, the mobile object 100 can prevent the mobile object 100 from decelerating before the via point without recognizing the via point as the temporary destination point. Details of the processing of the present invention will be described below.

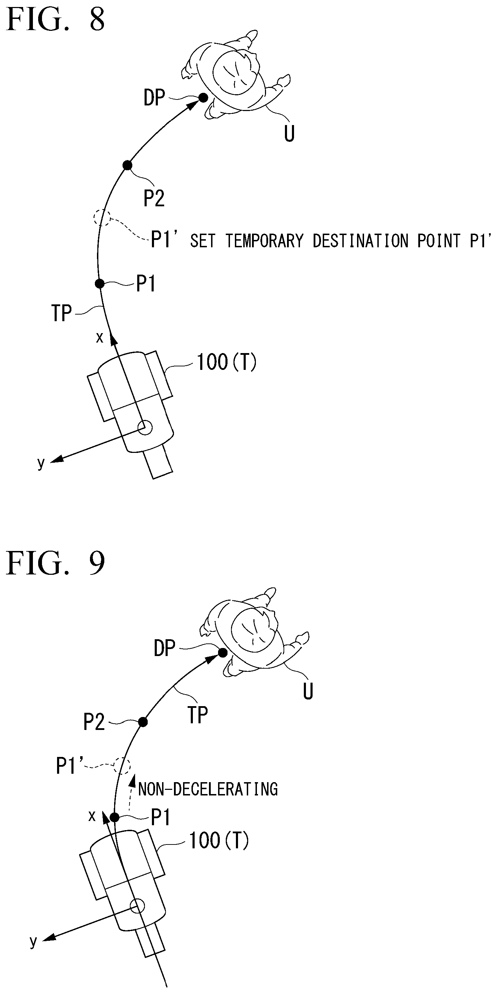

FIG. 8 is a diagram which shows an example of a temporary destination point set by the route generation unit 204. FIG. 8 represents, as an example, a scene in which the mobile object 100 travels along the route TP generated in FIG. 6. As shown in FIG. 8, the route generation unit 204 sets a temporary destination point P1' between the nearest via point P1 and a second via point P2, which is the next via point after the nearest via point P1, and the drive control unit 206 causes the mobile object 100 to travel toward the temporary destination point P1'. For example, the route generation unit 204 sets the temporary destination point P1' using a midpoint between the nearest via point P1 and the next second via point P2 on the route TP. A method of setting the temporary destination point P1' is not limited to such a method, and it is sufficient that the temporary destination point P1' may be set at least between the temporary destination point P1' and a destination point DP.

FIG. 9 is a diagram which shows an example of a first scene in which the mobile object 100 travels toward a temporary destination point. FIG. 9 represents, as an example, a scene in which the mobile object 100 is traveling toward the temporary destination point P1' set in FIG. 8. Unlike a case of FIG. 7 in which the mobile object 100 approaches the via point P1 recognized as a temporary destination point and deceleration control is performed, in a case shown in FIG. 9, the mobile object 100 is traveling toward the temporary destination point P1' in front of the via point P1, so that the drive control unit 206 causes the mobile object 100 to travel along the route TP without decelerating even when approaching the via point P1. Note that FIGS. 8 and 9 show an example in which the via point P1 and via point P2 exist between a current location of the mobile object 100 and the destination point DP. However, even if the via point P2 coincides with the destination point DP, the route generation unit 204 can set the temporary destination point P1' between the via point P1 and the destination point DP, and the drive control unit 206 can prevent the mobile object 100 from decelerating before the via point by causing the mobile object 100 to travel toward the temporary destination point P1'.

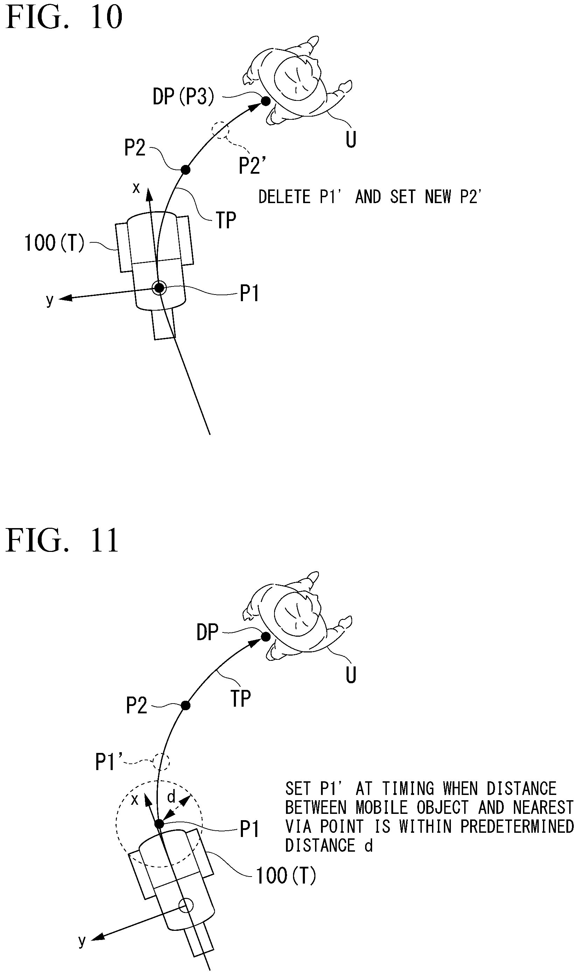

FIG. 10 is a diagram which shows an example of a second scene in which the mobile object 100 travels toward a temporary destination point. FIG. 10 represents, as an example, a scene in which the mobile object 100 travels along the route TP toward the temporary destination point P1' set in FIG. 9 and reaches the via point P1. When the mobile object 100 reaches the via point P1, the route generation unit 204 deletes the temporary destination point P1' and sets a next temporary destination point P2' between the next via point P2 and a third via point P3 (equal to the destination point DP), which is a via point next to the second via point, and the drive control unit 206 causes the mobile object 100 to travel toward the temporary destination point P2'. In the case of FIG. 10, since the second via point is a last via point, in this case, the drive control unit 206 sets the next temporary destination point P2' between the via point P2 and the destination point DP. By deleting the temporary destination point P1', the mobile object 100 can travel without decelerating even when it approaches the destination point P1'.

In this manner, the route generation unit 204 and the drive control unit 206 set a temporary destination point between a certain via point and the next via point, cause the mobile object 100 to travel toward the temporary destination point, delete the temporary destination point at a timing when the mobile object 100 reaches the via point, set a temporary destination point between the next via point and the one after that, and repeat the processing of causing the mobile object 100 to travel toward the temporary destination point. As a result, even when the mobile object 100 approaches each via point, it can travel efficiently via the via point to the destination without decelerating by the drive control unit 206.

In the embodiment described above, the temporary destination point is set between a nearest via point and the next via point when the mobile object 100 heads toward the nearest via point. However, the present invention is not limited to such a configuration, and the temporary destination point may be set when the mobile object 100 enters a predetermined range from the nearest via point.

FIG. 11 is a diagram which shows an example of another aspect in which the route generation unit 204 sets a temporary destination point. As shown in FIG. 11, the route generation unit 204 may set a temporary destination point P1' between the nearest via point P1 and the next via point P2 when a distance between the mobile object 100 and the nearest via point P1 is within a predetermined distance d. With such a configuration, it is possible to suppress deceleration of the mobile object 100 caused by the mobile object 100 approaching the via point P1.

### [Processing flow]

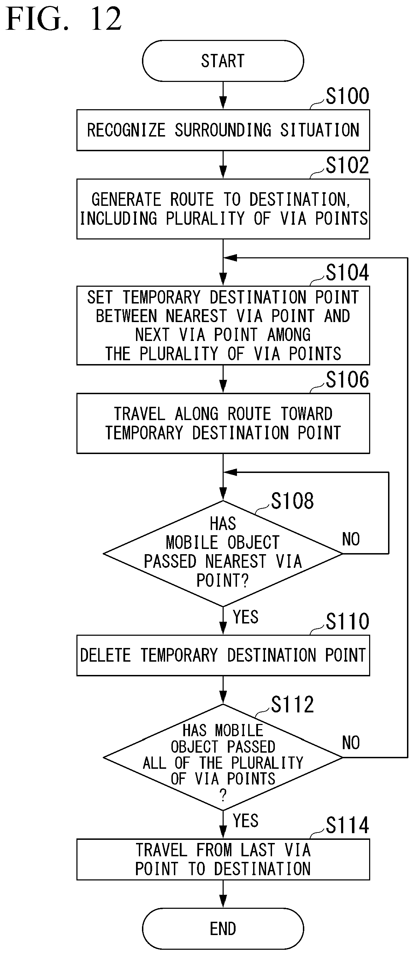

A flow of processing executed by the control device 200 will be described below with reference to FIG. 12. FIG. 12 is a flowchart which shows an example of the flow of the processing executed by the control device 200. The processing shown in FIG. 12 is repeatedly executed while the mobile object 100 is traveling in the following mode or guidance mode.

First, the recognition unit 202 recognizes a surrounding situation of the mobile object 100 on the basis of at least an image of the surrounding situation of the mobile object 100 (step S100). Next, the route generation unit 204 generates a route that is from the mobile object 100 to the destination, and includes a plurality of via points, on the basis of the recognized surrounding situation and the set destination (step S102).

Next, the route generation unit 204 sets a temporary destination point between a nearest via point and the next via point among the plurality of generated via points (step S104). Next, the drive control unit 206 causes the mobile object 100 to travel along a route toward the set temporary destination point (step S106). Next, the route generation unit 204 determines whether the mobile object 100 has passed the nearest via point (step S108).

When it is determined that the mobile object 100 has passed the nearest via point, the route generation unit 204 deletes the temporary destination point (step S110). Next, the route generation unit 204 determines whether the mobile object 100 has passed all of the via points (step S112). When it is determined that the mobile object 100 has passed all of the via points, the drive control unit 206 causes the mobile object 100 to travel from a last via point to the destination (step S114). On the other hand, when it is determined that the mobile object 100 has not passed all of the via points, the control device 200 returns the processing to step S104. As a result, the processing of this flowchart will end.

According to the present embodiment as described above, processing of setting a temporary destination point between a certain via point and the next via point to cause the mobile object to travel toward the temporary destination point, deleting the temporary destination point at a timing when the mobile object reaches the via point, and setting the temporary destination point between the next via point and a via point after that to cause the mobile object 100 to travel toward the temporary destination point is repeated. As a result, the mobile object 100 can be caused to travel efficiently to the destination via the via points.

## Claims

1. A mobile object control device (200) comprising:
a storage medium (220) configured to store computer-readable instructions, and a processor (202, 204, 206) connected to the storage medium (220),
wherein the processor (202, 204, 206) is configured to execute the computer-readable instructions to
recognize a surrounding situation of a mobile object (100) on the basis of at least an image of the surrounding situation of the mobile object (100),
generate, on the basis of the recognized surrounding situation and a destination (DP) which is set, a route (TP) which is from the mobile object (100) to the destination (DP) and is composed of via points (P1, P2, P3) to be passed through by the mobile object (100),
control the mobile object (100) so that the mobile object (100) moves along the generated route (TP) to the destination (DP) via the via points (P1, P2, P3), and
when the mobile object (100) travels toward a first via point (P1) of a plurality of via points (P1, P2, P3), set a temporary destination point (P1'), which is located after the first via point (P1) along the generated route (TP), between the first via point (P1) and a second via point (P2) that is the next via point after the first via point (P1), and cause the mobile object (100) to travel toward the temporary destination point (P1') via the first via point (P1),
**characterized in that**
the processor (202, 204, 206) is further configured such that, when the mobile object (100) reaches the first via point (P1), the processor (202, 204, 206) deletes the temporary destination point (P1'), which is located after the first via point (P1) along the generated route (TP), and sets a next temporary destination point (P2'), which is located after the second via point (P2) along the generated route (TP), between the second via point (P2) and a third via point (P3) which is the next via point after the second via point (P2), and repeats processing of causing the mobile object (100) to travel toward the next temporary destination point (P2') via the second via point (P2).

2. The mobile object control device (200) according to claim 1,
wherein the processor (202, 204, 206) is configured to set the temporary destination point (P1') when a distance between the mobile object (100) and the first via point (P1) becomes equal to or less than a threshold value.

3. The mobile object control device (200) according to claim 1 or 2,
wherein the mobile object (100) is configured to operate in either a following mode in which the mobile object (100) moves to follow a user (U), or a guidance mode in which the mobile object (100) moves in front of the user (U) in accordance with a movement speed of the user (U).

4. The mobile object control device (200) according to claim 3,
wherein, when the mobile object (100) operates in the following mode, the destination (DP) is the user (U) or a point within a predetermined range from the user (U).

5. The mobile object control device (200) according to claim 3 or 4,
wherein, when the mobile object (100) operates in the guidance mode, the destination (DP) is a point set by the user (U) or a point within a predetermined range in

6. The mobile object control device (200) according to any one of claims 3 to 4,
wherein, when the mobile object (100) operates in the guidance mode, the destination (DP) is a temporary point that is temporarily set to reach a destination point set by the user (U).

7. The mobile object control device (200) according to any one of claims 3 to 4,
wherein, when the mobile object (100) operates in the guidance mode, the destination (DP) is a point estimated on the basis of map information (222) or of an operation of the user (U).

8. The mobile object control device (200) according to any one of the preceding claims, wherein the second via point (P2) is the destination (DP).

9. A mobile object control method comprising:
by a computer (200),
recognizing (S100) a surrounding situation of a mobile object (100) on the basis of at least an image of the surrounding situation of the mobile object (100);
generating (S102) a route (TP) that is from the mobile object (100) to a destination (DP), which is set, on the basis of the recognized surrounding situation and the destination (DP), and is constituted by via points (P1, P2, P3) to be passed through by the mobile object (100);
controlling (S106, S114) the mobile object (100) so that the mobile object (100) moves to the destination (DP) via the via points (P1, P2, P3) along the generated route (TP);
when the mobile object (100) travels toward a first via point (P1) of the plurality of via points (P1, P2, P3), setting (S104) a temporary destination point (P1'), which is located after the first via point (P1) along the generated route (TP), between the first via point (P1) and a second via point (P2) that is the next via point after the first via point (P1), and causing the mobile object (100) to travel toward the temporary destination point (P1') via the first via point (P1),
**characterized in that**
when the mobile object (100) reaches the first via point (P1), deleting (S110) the temporary destination point (P1'), which is located after the first via point (P1) along the generated route (TP), and setting (S104) a next temporary destination point (P2'), which is located after the second via point (P2) along the generated route (TP), between the second via point (P2) and a third via point (P3) which is the next via point after the second via point (P2), and repeating processing of causing the mobile object (100) to travel toward the next temporary destination point (P2') via the second via point (P2).

## Patentansprüche

1. Eine mobile Objektsteuerungsvorrichtung (200), aufweisend:
ein Speichermedium (220), das zum Speichern von computerlesbaren Anweisungen ausgebildet ist, und
einen Prozessor (202, 204, 206), der mit dem Speichermedium (220) verbunden ist,
wobei der Prozessor (202, 204, 206) so ausgebildet ist, dass er die computerlesbaren Anweisungen ausführt, um
die Umgebungssituation eines mobilen Objekts (100) auf der Grundlage zumindest eines Bildes der Umgebungssituation des mobilen Objekts (100) zu erkennen,
auf der Grundlage der erkannten Umgebungssituation und eines festgelegten Zielpunktes (DP) eine Route (TP) zu generieren, die vom mobilen Objekt (100) zum Zielpunkt (DP) führt und aus Wegpunkten (P1, P2, P3) besteht, die vom mobilen Objekt (100) passiert werden müssen,
das mobile Objekt (100) so zu steuern, dass sich das mobile Objekt (100) entlang der generierten Route (TP) über die Wegpunkte (P1, P2, P3) zum Zielpunkt (DP) bewegt, und um,
wenn sich das mobile Objekt (100) auf einen ersten Wegpunkt (P1) einer Mehrzahl an Wegpunkten (P1, P2, P3) zubewegt, einen temporären Zielpunkt (P1') festzulegen, der sich entlang der generierten Route (TP) hinter dem ersten Wegpunkt (P1) befindet, zwischen dem ersten Wegpunkt (P1) und einem zweiten Wegpunkt (P2), der der nächste Wegpunkt nach dem ersten Wegpunkt (P1) ist, und um das mobile Objekt (100) zu veranlassen, sich über den ersten Wegpunkt (P1) in Richtung des temporären Zielpunkts (P1') zu bewegen,
**dadurch gekennzeichnet, dass**
der Prozessor (202, 204, 206) ferner so ausgebildet ist, dass, wenn das mobile Objekt (100) den ersten Wegpunkt (P1) erreicht, der Prozessor (202, 204, 206) den temporären Zielpunkt (P1'), der sich nach dem ersten Wegpunkt (P1) entlang der generierten Route (TP) befindet,
löscht und einen nächsten temporären Zielpunkt (P2') festlegt, der sich entlang der generierten Route (TP) nach dem zweiten Wegpunkt (P2) befindet, zwischen dem zweiten Wegpunkt (P2) und einem dritten Wegpunkt (P3), der der nächste Wegpunkt nach dem zweiten Wegpunkt (P2) ist, und den Vorgang wiederholt, um das mobile Objekt (100) dazu zu veranlassen, über den zweiten Wegpunkt (P2) zum nächsten temporären Zielpunkt (P2') zu fahren.

2. Die mobile Objektsteuerungsvorrichtung (200) nach Anspruch 1, wobei der Prozessor (202, 204, 206) so ausgebildet ist, dass er den temporären Zielpunkt (P1') festlegt, wenn ein Abstand zwischen dem mobilen Objekt (100) und dem ersten Wegpunkt (P1) gleich oder kleiner als ein Schwellenwert wird.

3. Die mobile Objektsteuerungsvorrichtung (200) nach Anspruch 1 oder 2, wobei das mobile Objekt (100) so ausgebildet ist, dass es entweder in einem Folgemodus, in dem sich das mobile Objekt (100) bewegt, um einem Benutzer (U) zu folgen, oder in einem Führungsmodus, in dem sich das mobile Objekt (100) entsprechend der Bewegungsgeschwindigkeit des Benutzers (U) vor dem Benutzer (U) bewegt, betrieben werden kann.

4. Die mobile Objektsteuerungsvorrichtung (200) nach Anspruch 3, wobei, wenn das mobile Objekt (100) im Folgemodus betrieben wird, der Zielpunkt (DP) den Benutzer (U) oder einen Punkt innerhalb eines vorbestimmten Bereichs um den Benutzer (U) darstellt.

5. Die mobile Objektsteuerungsvorrichtung (200) nach Anspruch 3 oder 4, wobei, wenn das mobile Objekt (100) im Führungsmodus betrieben wird, der Zielpunkt (DP) einen vom Benutzer (U) festgelegten Punkt oder einen Punkt innerhalb eines vorbestimmten Bereichs vor dem Benutzer (U) darstellt.

6. Die mobile Objektsteuerungsvorrichtung (200) nach einem der Ansprüche 3 bis 4, wobei, wenn das mobile Objekt (100) im Führungsmodus betrieben wird, der Zielpunkt (DP) einen temporären Punkt darstellt, der vorübergehend festgelegt wird, um einen vom Benutzer (U) festgelegten Zielpunkt zu erreichen.

7. Die mobile Objektsteuerungsvorrichtung (200) nach einem der Ansprüche 3 bis 4, wobei, wenn das mobile Objekt (100) im Führungsmodus betrieben wird, der Zielpunkt (DP) einen Punkt darstellt, der auf der Grundlage von Karteninformation (222) oder einer Betätigung durch den Benutzer (U) geschätzt wird.

8. Die mobile Objektsteuerungsvorrichtung (200) nach einem der vorherigen Ansprüche, wobei der zweite Durchgangspunkt (P2) den Zielpunkt (DP) darstellt.

9. Ein Verfahren zur Steuerung eines mobilen Objekts, umfassend:
durch einen Computer (200),
Erkennen (S100) einer Umgebungssituation eines mobilen Objekts (100) auf der Grundlage zumindest eines Bildes der Umgebungssituation des mobilen Objekts (100);
Erzeugen (S102) einer Route (TP) vom mobilen Objekt (100) zu einem festgelegten Zielpunkt (DP) auf der Grundlage der erkannten Umgebungssituation und des Zielpunktes (DP), die aus Wegpunkten (P1, P2, P3) besteht, welche vom mobilen Objekt (100) passiert werden sollen;
Steuern (S106, S114) des mobilen Objekts (100), so dass sich das mobile Objekt (100) über die Wegpunkte (P1, P2, P3) entlang der generierten Route (TP) zum Zielpunkt (DP) bewegt;
Festlegen (S104), wenn sich das mobile Objekt (100) auf einen ersten Wegpunkt (P1) der mehreren Wegpunkte (P1, P2, P3) zubewegt, eines temporären Zielpunktes (P1'), der sich entlang der generierten Route (TP) hinter dem ersten Wegpunkt (P1) befindet, zwischen dem ersten Wegpunkt (P1) und einem zweiten Wegpunkt (P2), welcher der nächste Wegpunkt nach dem ersten Wegpunkt (P1) ist, und Veranlassen, dass sich das mobile Objekt (100) über den ersten Wegpunkt (P1) in Richtung des temporären Zielpunktes (P1') bewegt,
**dadurch gekennzeichnet, dass**
wenn das mobile Objekt (100) den ersten Wegpunkt (P1) erreicht, der temporäre Zielpunkt (P1'), der sich entlang der generierten Route (TP) nach dem ersten Wegpunkt (P1) befindet, gelöscht wird (S110) und ein nächster temporärer Zielpunkt (P2') festgelegt wird (S104), der sich entlang der generierten Route (TP) nach dem zweiten Wegpunkt (P2) zwischen dem zweiten Wegpunkt (P2) und einem dritten Wegpunkt (P3) befindet, welcher nach dem zweiten Wegpunkt (P2) der nächste Wegpunkt ist, und Wiederholen des Vorgangs, um das mobile Objekt (100) zu veranlassen, sich über den zweiten Wegpunkt (P2) zum nächsten temporären Zielpunkt (P2') zu bewegen.

## Revendications

1. Procédé de commande d'objet mobile (200) comprenant :
un support de stockage (220) configuré pour stocker des instructions lisibles par ordinateur, et un processeur (202, 204, 206) connecté au support de stockage (220),
dans lequel le processeur (202, 204, 206) est configuré pour exécuter les instructions lisibles par ordinateur pour
reconnaître une situation environnante d'un objet mobile (100) sur la base d'au moins une image de la situation environnante de l'objet mobile (100),
générer, sur la base de la situation environnante reconnue et d'une destination (DP) qui est définie, un itinéraire (TP) qui va de l'objet mobile (100) à la destination (DP) et qui est composé de points d'interconnexion (P1, P2, P3) devant être traversés par l'objet mobile (100),
commander l'objet mobile (100) de sorte que l'objet mobile (100) se déplace le long de l'itinéraire généré (TP) vers la destination (DP) via les points d'interconnexion (P1, P2, P3), et
lorsque l'objet mobile (100) se déplace en direction d'un premier point d'interconnexion (P1) d'une pluralité de points d'interconnexion (P1, P2, P3), définir un point de destination temporaire (P1'), qui est situé après le premier point d'interconnexion (P1) le long de l'itinéraire généré (TP), entre le premier point d'interconnexion (P1) et un deuxième point d'interconnexion (P2) qui est le point d'interconnexion suivant après le premier point d'interconnexion (P1), et amener l'objet mobile (100) à se déplacer en direction du point de destination temporaire (P1') via le premier point d'interconnexion (P1),
**caractérisé en ce que**
le processeur (202, 204, 206) est en outre configuré de sorte que, lorsque l'objet mobile (100) atteint le premier point d'interconnexion (P1), le processeur (202, 204, 206) supprime le point de destination temporaire (P1'), qui est situé après le premier point d'interconnexion (P1) le long de l'itinéraire généré (TP), et définit un prochain point de destination temporaire (P2'), qui est situé après le deuxième point d'interconnexion (P2) le long de l'itinéraire généré (TP), entre le deuxième point d'interconnexion (P2) et un troisième point d'interconnexion (P3) qui est le prochain point d'interconnexion après le deuxième point d'interconnexion (P2), et répète le traitement consistant à amener l'objet mobile (100) à se déplacer en direction du prochain point de destination temporaire (P2') via le deuxième point d'interconnexion (P2).

2. Dispositif de commande d'objet mobile (200) selon la revendication 1,
dans lequel le processeur (202, 204, 206) est configuré pour définir le point de destination temporaire (P1') lorsqu'une distance entre l'objet mobile (100) et le premier point d'interconnexion (P1) devient égale ou inférieure à une valeur seuil.

3. Dispositif de commande d'objet mobile (200) selon la revendication 1 ou la revendication 2,
dans lequel l'objet mobile (100) est configuré pour fonctionner soit dans un mode de suivi dans lequel l'objet mobile (100) se déplace pour suivre un utilisateur (U), soit dans un mode de guidage dans lequel l'objet mobile (100) se déplace devant l'utilisateur (U) conformément à une vitesse de déplacement de l'utilisateur (U).

4. Dispositif de commande d'objet mobile (200) selon la revendication 3,
dans lequel, lorsque l'objet mobile (100) fonctionne dans le mode de suivi, la destination (DP) est l'utilisateur (U) ou un point à l'intérieur d'une plage prédéterminée de l'utilisateur (U).

5. Dispositif de commande d'objet mobile (200) selon la revendication 3 ou 4,
dans lequel, lorsque l'objet mobile (100) fonctionne dans le mode de guidage, la destination (DP) est un point défini par l'utilisateur (U) ou un point à l'intérieur d'une plage prédéterminée devant l'utilisateur (U).

6. Dispositif de commande d'objet mobile (200) selon l'une quelconque des revendications 3 à 4,
dans lequel, lorsque l'objet mobile (100) fonctionne dans le mode de guidage, la destination (DP) est un point temporaire qui est défini temporairement pour atteindre un point de destination défini par l'utilisateur (U).

7. Dispositif de commande d'objet mobile (200) selon l'une quelconque des revendications 3 à 4,
dans lequel, lorsque l'objet mobile (100) fonctionne dans le mode de guidage, la destination (DP) est un point estimé sur la base d'informations cartographiques (222) ou d'une opération de l'utilisateur (U).

8. Dispositif de commande d'objet mobile (200) selon l'une quelconque des revendications précédentes,
dans lequel le deuxième point d'interconnexion (P2) est la destination (DP).

9. Procédé de commande d'objet mobile comprenant :
par un ordinateur (200),
la reconnaissance (S100) d'une situation environnante d'un objet mobile (100) sur la base d'au moins une image de la situation environnante de l'objet mobile (100) ;
la génération (S102) d'un itinéraire (TP) qui va de l'objet mobile (100) à une destination (DP), qui est défini, sur la base de la situation environnante reconnue et de la destination (DP), et est constitué par des points d'interconnexion (P1, P2, P3) devant être traversés par l'objet mobile (100) ;
la commande (S106, S114) de l'objet mobile (100) de sorte que l'objet mobile (100) se déplace vers la destination (DP) via les points d'interconnexion (P1, P2, P3) le long de l'itinéraire (TP) généré ;
lorsque l'objet mobile (100) se déplace en direction d'un premier point d'interconnexion (P1) de la pluralité de points d'interconnexion (P1, P2, P3), la définition (S104) d'un point de destination temporaire (P1'), qui est situé après le premier point d'interconnexion (P1) le long de l'itinéraire généré (TP), entre le premier point d'interconnexion (P1) et un deuxième point d'interconnexion (P2) qui est le point d'interconnexion suivant après le premier point d'interconnexion (P1), et le déplacement de l'objet mobile (100) en direction du point de destination temporaire (P1') via le premier point d'interconnexion (P1),
**caractérisé en ce que**
lorsque l'objet mobile (100) atteint le premier point d'interconnexion (P1), la suppression (S110) du point de destination temporaire (P1'), qui est situé après le premier point d'interconnexion (P1) le long de l'itinéraire généré (TP), et la définition (S104) d'un point de destination temporaire suivant (P2'), qui est situé après le deuxième point d'interconnexion (P2) le long de l'itinéraire généré (TP), entre le deuxième point d'interconnexion (P2) et un troisième point d'interconnexion (P3) qui est le point d'interconnexion suivant après le deuxième point d'interconnexion (P2), et la répétition du déplacement de l'objet mobile (100) en direction du prochain point de destination temporaire (P2') via le deuxième point d'interconnexion (P2).
